# EUROPEAN PATENT APPLICATION

(11) **EP 2 453 379 A1**
(43) Date of publication of application: **16.05.2012**
(21) Application number: 10014614.1
(22) Date of filing: 15.11.2010
(51) Int. Cl.: G06F 21/20

(54) **Method, system, user equipment and program for authenticating a user**

(71) Applicant: Deutsche Telekom AG, 53113 Bonn (DE)
(72) Inventor: Wilhelm, Uwe-Georg, 53227 Bonn (DE)
(74) Representative: Schwöbel, Thilo K.

(57) **Abstract**

The present invention relates to a method for authenticating a user, the user having a first client device being connected to an application server by means of a first communication link, wherein a second client device is used for authentication purposes of the user, the second client device being able to communicate with an authentication device by means of a second communication link, wherein the application server requests the authentication of the user for providing a service to the user, wherein the method comprises the steps of:
-- the application server sends an authentication request information to the first client device,
-- the authentication request information is transmitted at least partly from the first client device to the second client device in an automatic manner,
-- an authentication reply information is transmitted from the second client device to the authentication device, and at least partly from the authentication device to the application server.

## Description

### BACKGROUND

The present invention relates to a method, a system, a User Equipment and a program for authenticating a user having a first client device being connected to an application server by means of a first communication link.

The World Wide Web (WWW) has permeated almost all aspects of our lives-from buying cameras to buying real estate, and from reading a newspaper to watching a movie. Unfortunately, the web can also be a very dangerous place where even savvy users can compromise highly sensitive information or suffer substantial financial loss.

Hence, providing secure access to web applications is an important security problem. However, this problem is particularly challenging for at least two reasons. First, the Internet is inherently insecure because it is a public network. As a result, systems and techniques to provide secure access to web applications over the Internet need to address a wide variety of security issues. Second, the web owes much of its phenomenal success to its user-friendly interface, e.g., the web-browser. Hence, it is important to ensure that a security solution is both highly secure and user friendly. In other words, creating systems and techniques that provide secure access to web applications can be very challenging because these systems and techniques need to be highly secure, and user friendly.

Usually, users use a variety of different services or applications via the World Wide Web, e.g. social networks, banking applications, download services for media such as movies or the like. For this variety of different services, users usually have an individual pair of a username and a password, also called user credentials. For reasons of convenience of the users, such user credentials often are identical or very similar for different services or are "managed" by the user in an ad-hoc fashion relying on paper-based notes. Alternatively, users may rely on special software programs such as "KeePass", "pwsafe" or the like that provide a password administration functionality without the need of memorizing different user credentials. Such a password administration program provides the possibility to store different pairs of user credentials in a secure manner (usually encrypted) such that the relevant username and password are retrieved in case a specific service is to be used. In case such password administration programs are used on a mobile device, a user often needs to retrieve the credentials on one device and input the retrieved credentials on another device. Furthermore, single-sign-on services (such as "Kerberos", "Liberty Alliance", or "OpenID") are known that provide such functionality in a much simpler manner. However, the use of these services usually require a uniform governance usually only present within corporate structures.

### SUMMARY

An object of the present invention is to overcome - at least partly - the limitations of the current state of the art, and to provide a simple and secure sign-on or authentication functionality for the authentication of a user in an easy and convenient manner providing a comparably high level of security against the dangers of the World Wide Web and requiring little or no technical skills from the user and no special hardware other than a regular mobile phone.

The object of the present invention is achieved by a method for authenticating a user, the user having a first client device being connected to an application server by means of a first communication link, wherein a second client device is used for authentication purposes of the user, the second client device being able to communicate with an authentication device by means of a second communication link, wherein the application server requests the authentication of the user for providing a service to the user, wherein the method comprises the steps of:
-- the application server sends an authentication request information to the first client device using the first communication link,
-- the authentication request information is transmitted at least partly from the first client device to the second client device in an automatic manner,
-- an authentication reply information is transmitted from the second client device to the authentication device using the second communication link, and at least partly from the authentication device to the application server.

According to the present invention, it is advantageously possible to easily and conveniently use a multitude of internet services or applications
-- without the need to memorize a multitude of different user credentials,
-- without the need of administering the multitude of different user credentials by means of a program providing a password administration functionality and hence the need to transfer the retrieved user credentials from the password administration program to an internet application (or a browser program),
-- without the security risks inherent in using one and the same user credentials for a plurality of different internet services or applications, and
-- without the security risks associated with storing important user credentials openly (or weakly concealed) on paper-based notes.

It is of particular importance according to the present invention that a second communication link is established between the second client device of the user and the authentication device in a manner such that the user can be authenticated by the authentication device via the second client device, especially by means of an identification module within the second client device or assigned to the second client device. Such an identification module is usually present within such client devices having a mobile phone or cellular phone functionality (subscriber identity module according to the Global System of Mobile Communication (GSM) standard or Universal Subscriber Identity Module (USIM) according to the Universal Mobile Telecommunication System (UMTS) standard or other identification modules according to other standards such as Long Term Evolution (LTE) or the like. Thereby, it is possible that the network operator of the public land mobile network of the second client device is the identity provider for the application server, i.e. for the internet application requested by the user at the application server.

It is particularly important that the inventive method - by principle - is not vulnerable with regard to a number of internet threats such as attacks by Trojan programs or phishing attacks.

The first client device is preferably a computer device such as a personal computer (e.g. in the form of a regular PC or in the form of a laptop computer or in the form of a netbook computer or in the form of a tablet computer or the like). The first client device is usually connected to the application server by means of an internet connection, i.e. the first communication link is an internet communication link involving usually the Internet Protocol (IP).

According to the present invention, it is preferred that the initiation of the transmission of the authentication request information from the first client device to the second client device is performed automatically without an input from the user.

Thereby, it is advantageously possible to greatly enhance the usability and the convenience of the user according to the present invention.

According to the present invention, it is furthermore preferred that the initiation of the transmission of the authentication request information from the first client device to the second client device is performed at least partly automatically and a user input of an additional identification or authenticating information to the first client device or to the second client device may be requested for performing a more secure and reliable authentication of the user.

Thereby, it is advantageously possible according to the present invention that different levels of security may be realized such that for financially (or otherwise) relevant or sensitive data, a slightly less convenient but safer method is used and for (financially or otherwise) less relevant data a more convenient method is used. The additional use of an identification information provides furthermore the possibility of realizing a comparably high degree of security against the loss of the second client device by the user of the inventive method.

It is furthermore preferred according to the present invention that the authentication request information is transmitted at least partly from the first client device to the second client device by means of an optical transmission involving a display means of the first client device and a camera means of the second client device.

Thereby, it is very advantageously possible according to the present invention to realize a very intuitive use of the method for authentication by using the camera means of the second client device and focussing an optically encoded and/or encrypted information such as:
-- a one-dimensional bar code,
-- a two-dimensional bar code (examples thereof include a so-called QR-code, a DataMatrix-code, a Sema-code or other types of two-dimensional bar codes or colour codes), or
-- any other appropriate means of encoding data that may be recovered by means of a camera.
For example, the user launches a specific application on the second client device being, e.g., a mobile phone or another portable or mobile device providing an optically sensitive functionality such as a camera means and an interface for establishing the second communication link.

According to the present invention, it is still furthermore preferred that the initiation of the transmission of the authentication request information from the first client device to the second client device only requires the triggering of the camera means of the second client device.

Thereby, a very convenient usability of the inventive method is possible and a comparably important degree of control is possible of using the method for authentication. For example, it is possible that the camera means of the second client device is triggered automatically or by means of a user interaction of user input such as pressing a button (e.g. a soft button) invoking the camera functionality of the second client device.

Furthermore, it is preferred according to the present invention that the authentication request information is transmitted at least partly from the first client device to the second client device by means of at least one out of:
-- a short-range radio link involving a short-range radio interface at the first and at the second client device,
-- an acoustical transmission involving a acoustical transducer at the first and at the second client device,
-- a wire-line transmission.

Thereby, it is advantageously possible that other communication interfaces between the first client device and the second client device are used such that further areas of application of the inventive method are possible.

Furthermore, it is preferred according to the present invention that for the transmission of the authentication reply information from the second client device to the authentication device, at least one out of a wireless local area network and a wireless wide area network is used.

Thereby, it is easily possible that the second communication link is a secured communication link between the second client device and the authentication device.

According to a further preferred embodiment of the present invention, the wireless wide area network is a public land mobile network.

It is furthermore preferred according to the present invention that the authentication request information is a Uniform Resource Identifier (URI), especially a Uniform Resource Locator comprising a session identification information.

Thereby, it is advantageously possible that a comparably high degree of security is realized by means of the inventive method. It is advantageous according to the present invention that the authentication request information transmitted from the first client device to the second client device comprises for example a Uniform Resource Locator (URL) and a session identification information (also called session ID involving, e.g., 160 bits and being a random number).

According to a further preferred embodiment of the present invention, the second client device is a mobile phone telephone device.

Furthermore, it is preferred according to the present invention that the authentication reply information is sent to the authentication device by means of using at least one out of a short message system (or any other data communication service) of the public land mobile network and an Internet Protocol based communication system of the public land mobile network.

The present invention further relates to a system for authenticating a user, the system comprising an application server, an authentication server, a first client device, and a second client device, wherein the first client device is connected to the application server by means of a first communication link, wherein the second client device is used for authentication purposes of the user, the second client device being able to communicate with the authentication device by means of a second communication link, wherein the application server requests the authentication of the user for providing a service to the user, wherein the system is provided such that an authentication request information is sent from the application server to the first client device, wherein the system is further provided such that the authentication request information is transmitted at least partly from the first client device to the second client device in an automatic manner, wherein the system is furthermore provided such that an authentication reply information is transmitted from the second client device to the authentication device, and at least partly from the authentication device to the application server.

The invention furthermore relates to a User Equipment serving as a second client device in an inventive system for authenticating a user.

Additionally, the present invention relates to a program comprising a computer readable program code for executing an inventive method or for configuring or controlling an inventive User Equipment or an inventive system.

### BRIEF DESCRIPTION OF THE DRAWINGS

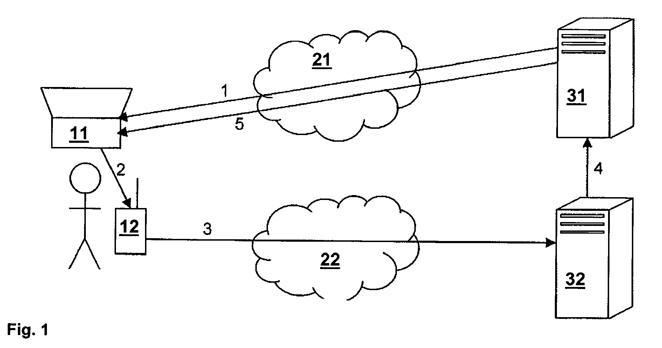

Figure 1 schematically illustrates a system according to the present invention showing the important steps of the inventive method.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, an inventive system is schematically shown, illustrating also the inventive method.

A first client device 11 is connected to an application server 31 via a first communication link 21, especially an internet communication link or a communication link involving at least partly the (public) internet.

A second client device 12 is connected (or can be connected) via a second communication link 22, especially involving a cellular network or a public land mobile network, to an authentication device 32.

The user requests in a first step, designated by reference sign 1, a service from the application server 31. Such a requested service can, e.g., be an internet service or application involving the functionality of a social network, or an online-banking functionality, or any other internet related service. The user needs to be authenticated by the application server 31. Therefore, the application server 31 sends an authentication request information to the first client device 11.

In a second step, designated by reference sign 2, the first client device 11 communicates the authentication request information to the second client device 12. For that purpose, the first client device 11 comprises an interface, and the second client device 12 comprises a corresponding interface. One important example of such corresponding interfaces is an optical display or display means at the first client device 11 and a camera means at the second client device 12. By using this combination of interfaces of the first and second client devices 11, 12 according to the present invention, the authentication request information is displayed by the display device or display means of the first client device 11 I and the displayed image is recorded by the camera means of the second client device 12. Especially, the authentication request information is displayed in the form of a two-dimensional bar code, such as a QR-code or a Sema-code or the like. Other corresponding combinations of (local) communication interfaces of the first and second client device 11, 12 include an acoustical interface (i.e. involving acoustical transducers at both the first and second client device 11 such as a loudspeaker at the first client device and a microphone at the second client device 12).

In a third step, designated by reference sign 3, an authentication reply information is sent from the second client device 12 to the authentication device 32. The authentication reply information can be identical to the authentication request information but does not need to be identical. For example, the authentication reply information could be the authentication request information in encrypted form, thereby even more enhancing the security level of the method according to the present invention.

The third step can involve the transmission of an Uniform Resource Locator (URL) including a session identification information to the authentication device 32 or authentication server 32.

In a fourth step, designated by reference sign 4, the authentication device 32 (which is usually a network operator of a public land mobile network related to the second client device 12) identifies and authenticates the user (by means of authenticating the identity module within or assigned to the second client device 12) such that an identity information or an authentication information can be transmitted to the application server 31.

In a fifth step, designated by reference sign 5, the application server identifies the active service requested by the user such that the requested service can be provided to the user. In case that the user has previously been unknown to the application server 31, the application server 31 can request additional identification information from the authentication device 32 (or authentication server 32). This results in a situation where the authentication device 32 is an identity provider for such requested services.

It is particularly preferred according to the present invention that the session identification information is transmitted to the application server 31 (by the authentication device 32) such that the application server 31 is able to unite (or federate) the authentication reply information with the authentication request information (sent to the first client device in the first step according to the inventive method).

It is furthermore preferred that the user can be required to input an identification information to the second client device 12 such as a personal identification number (PIN number) or the like prior to or during the second step of the inventive method. This personal identification number may then be added to the authentication reply information in order to convey the intent of the user to actually use the requested service to the authentication device 32. Thereby, it is possible to achieve an enhanced degree of security of the inventive method.

## Claims

1. Method for authenticating a user, the user having a first client device (11) being connected to an application server (31) by means of a first communication link (21), wherein a second client device (12) is used for authentication purposes of the user, the second client device (12) being able to communicate with an authentication device (32) by means of a second communication link (22), wherein the application server (31) requests the authentication of the user for providing a service to the user, wherein the method comprises the steps of:
-- the application server (31) sends an authentication request information to the first client device (11),
-- the authentication request information is transmitted at least partly from the first client device (11) to the second client device (12) in an at least partly automatic manner,
-- an authentication reply information is transmitted from the second client device (12) to the authentication device (32), and at least partly from the authentication device (32) to the application server (31).

2. Method according to claim 1, wherein the initiation of the transmission of the authentication request information from the first client device (11) to the second client device (12) is performed automatically.

3. Method according to one of the preceding claims, wherein the initiation of the transmission of the authentication request information from the first client device (11) to the second client device (12) is performed at least partly automatically and a user input of an additional identification information to the first client device (11) or to the second client device (12) is required for performing the authentication of the user.

4. Method according to one of the preceding claims, wherein the authentication request information is transmitted at least partly from the first client device (11) to the second client device (12) by means of an optical transmission involving a display means of the first client device (11) and a camera means of the second client device (12).

5. Method according to one of the preceding claims, wherein the initiation of the transmission of the authentication request information from the first client device (11) to the second client device (12) only requires the triggering of the camera means of the second client device (12).

6. Method according to one of the preceding claims, wherein the authentication request information is transmitted at least partly from the first client device (11) to the second client device (12) by means of at least one out of:
-- a short-range radio link involving a short-range radio interface at the first and at the second client device (11, 12),
-- an acoustical transmission involving a acoustical transducer at the first and at the second client device (11, 12),
-- a wire-line transmission.

7. Method according to one of the preceding claims, wherein for the transmission of the authentication reply information from the second client device (12) to the authentication device (32), at least one out of a wireless local area network and a wireless wide area network and a wire-line network is used.

8. Method according to one of the preceding claims, wherein the wireless wide area network is a public land mobile network.

9. Method according to one of the preceding claims, wherein the authentication request information is a Uniform Resource Identifier (URI), especially a Uniform Resource Locator comprising a session identification information.

10. Method according to one of the preceding claims, wherein the second client device (12) is a mobile phone telephone device.

11. Method according to one of the preceding claims, wherein the authentication reply information is sent to the authentication device (32) by means of using at least one out of a short message system of the public land mobile network and an Internet Protocol based communication system of the public land mobile network.

12. System for authenticating a user, the system comprising an application server (31), an authentication server (32), a first client device (11), and a second client device (12), wherein the first client device (11) is connected to the application server (31) by means of a first communication link (21), wherein the second client device (12) is used for authentication purposes of the user, the second client device (12) being able to communicate with the authentication device (32) by means of a second communication link (22), wherein the application server (31) requests the authentication of the user for providing a service to the user, wherein the system is provided such that an authentication request information is sent from the application server (31) to the first client device (11), wherein the system is further provided such that the authentication request information is transmitted at least partly from the first client device (11) to the second client device (12) in an automatic manner, wherein the system is furthermore provided such that an authentication reply information is transmitted from the second client device (12) to the authentication device (32), and at least partly from the authentication device (32) to the application server (31).

13. User Equipment (12) serving as a second client device (12) in a system for authenticating a user according to claim 12.

14. Program comprising a computer readable program code for executing a method according to one of claims 1 to 11 or for configuring or controlling a User Equipment (12) according claim 13 or a system according to claim 12.
